# EUROPÄISCHE PATENTSCHRIFT

(11) **EP 2 930 355 B1**
(45) Veröffentlichungstag und Bekanntmachung des Hinweises auf die Patenterteilung: **01.08.2018**
(21) Anmeldenummer: 14164228.0
(22) Anmeldetag: 10.04.2014
(51) Int. Cl.: F03D 80/30, F03D 1/06

(54) **Windenergieanlagenrotorblatt mit einem Blitzschutzleiter und einem Potentialausgleichselement**
Wind turbine rotor blade with a lightning conductor and a potential equalisation element
Pale de rotor d'éolienne dotée d'un conducteur de parafoudre et d'un élément de compensation de potentiel

(43) Veröffentlichungstag der Anmeldung: 14.10.2015
(73) Patentinhaber: Nordex Energy GmbH, 22419 Hamburg (DE)
(72) Erfinder: Ohlerich, Nick, 18055 Rostock (DE)
(74) Vertreter: Hauck Patentanwaltspartnerschaft mbB

(56) Entgegenhaltungen:
- WO-A2-2013/097855
- US-A1- 2007 074 892
- US-A1- 2011 182 731
- US-B2- 7 651 320

## Beschreibung

Die Erfindung betrifft ein Windenergieanlagenrotorblatt mit einer Blattwurzel, einem Blitzrezeptor, einem Blitzschutzleiter, der elektrisch mit dem Blitzrezeptor verbunden und zur Ableitung eines Blitzstroms in Richtung zu der Blattwurzel hin bestimmt ist, einem weiteren elektrisch leitfähigen Element und einem Potentialausgleichselement, das den Blitzschutzleiter mit dem weiteren elektrisch leitfähigen Element elektrisch verbindet.

Es ist bekannt, Windenergieanlagenrotorblätter mit einer Blitzschutzeinrichtung vor Schäden durch einen Blitzschlag zu bewahren. Hierzu wird in der Regel im Bereich der Blattspitze ein Blitzschutzrezeptor angeordnet. Der Strom eines in den Blitzschutzrezeptor einschlagenden Blitzes wird dann über einen Blitzschutzleiter zur Blattwurzel hin und von dort über die Gondel und den Turm der Windenergieanlage in den Erdboden abgeleitet. Besondere Schwierigkeiten entstehen, wenn innerhalb des Windenergieanlagenrotorblatts mehrere elektrisch leitfähige Elemente mehr oder weniger parallel angeordnet sind. Infolge der hohen Blitzströme kommt es dann durch elektromagnetische Induktion zu großen Potentialdifferenzen zwischen den unterschiedlichen elektrisch leitfähigen Elementen, die zu Überschlägen und dadurch zu einer Beschädigung oder gar Zerstörung des Windenergieanlagenrotorblatts führen können. Es ist bekannt, derartigen Überschlägen durch Potentialausgleichselemente entgegenzuwirken.

Aus der Druckschrift EP 1 692 752 B1 ist ein Windenergieanlagenrotorblatt bekannt geworden, bei dem ein innenliegender, elektrisch leitfähiger Holm mit einem benachbart angeordneten Blitzschutzleiter verbunden ist. Hierzu sind Potentialausgleichselemente vorgesehen, die den Holm und den Blitzschutzleiter über eine elektrische Leitung miteinander verbinden. Der Kontakt zum Holm wird über ein leitfähiges, flächiges Band hergestellt.

Aus der Druckschrift EP 1 112 448 B2 ist ein Windenergieanlagenrotorblatt mit mehreren elektrisch leitfähigen Gurten aus einem Kohlenstofffasermaterial bekannt geworden. Zur Erhöhung der elektrischen Leitfähigkeit der Gurte werden metallbeschichtete Kohlenstoffasern eingesetzt, sodass die Stromtragfähigkeit der Gurte für einen Einsatz als Blitzschutzleiter ausreichen soll. Zusätzlich kann ein zentral angeordneter metallischer Blitzschutzleiter eingesetzt werden. Die Gurte und gegebenenfalls der zusätzliche metallische Blitzschutzleiter sind an mehreren Längspositionen über Potentialausgleichelemente in Form von innenliegenden, elektrischen Leitern miteinander verbunden.

Aus der Druckschrift EP 1 664 528 B1 ist ein Windenergieanlagenrotorblatt mit elektrisch leitfähigen Hauptgurten aus einem Kohlenstofffasermaterial und zwei im Inneren des Rotorblatts angeordneten Blitzschutzleitern bekannt geworden. Ein Potentialausgleich zwischen einem Hauptgurt und einem Blitzschutzleiter wird über ein Kupfergitter, das den Hauptgurt kontaktiert, und eine elektrische Verbindungsleitung hergestellt. Ein mittlerer Abschnitt der Verbindungsleitung ist mit dem Blitzschutzleiter verschraubt. Ein freies Ende der Verbindungsleitung ist gemeinsam mit massiven metallischen Verbindungselementen und dem Kupfergitter mit einem Blitzschutzrezeptor verschraubt.

Druckschrift WO 2013/097855 A2 zeigt ein Windenergieanlagenrotorblatt mit einem Blitzschutzleiter. Der Blitzschutzleiter ist mit einem Blitzrezeptor an der Blattspitze verbunden. Ein weiteres elektrisch leitfähiges Element besteht aus einem in Längsrichtung an der Außenseite des Rotorblatts entlanglaufenden Rezeptorband, das über seitliche Blitzrezeptoren und geflochtene Kupferkabel mit dem Blitzschutzleiter verbunden ist.

Aus der Druckschrift US 2011/0182731 A1 ist ein Windenergieanlagenrotorblatt mit einem Blitzschutzleiter und mehreren Blitzrezeptoren bekannt geworden. In einem Ausführungsbeispiel sind die Blitzrezeptoren über Kabel mit dem Blitzschutzleiter verbunden. Hierzu wird ein Verbindungsteil verwendet, das durch Schweißen, Löten oder Sprengplattieren/Sprengschweißen geformt wird.

Druckschrift US 2007/0074892 A1 beschreibt ein Windenergieanlagenrotorblatt mit den Merkmalen des Oberbegriffs des Anspruchs 1. Ein elektrischer Leiter stellt einen Potentialausgleich zwischen einem kohlenstofffaserhaltigen Tragstrukturbauteil und einem Blitzschutzleiter her. Die elektrische Verbindung zwischen dem Blitzschutzleiter und dem elektrischen Leiter wird mithilfe unterschiedlich ausgestalteter Klemmen hergestellt.

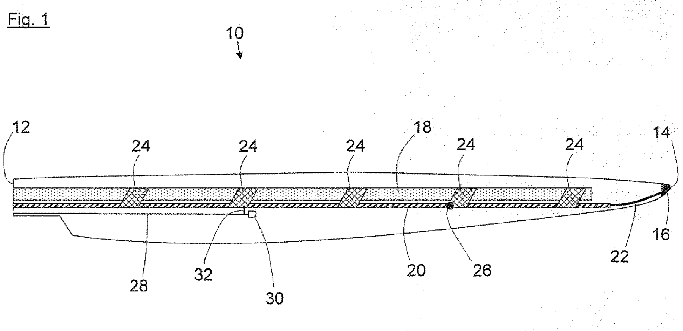

Druckschrift US 7,651,320 B2 beschreibt ebenfalls ein Windenergieanlagenrotorblatt mit den Merkmalen des Oberbegriffs des Anspruchs 1. Im Ausführungsbeispiel der Fig. 1 kann der elektrische Leiter einen Potentialausgleich zwischen dem Hauptlaminat und einem Blitzschutzleiter herstellen. Dies geschieht allerdings nicht unmittelbar, sondern über einen weiteren elektrischen Leiter, der über mehrere Schraubverbindungen mit dem Blitzschutzleiter und dem Leiter verbunden ist.

Davon ausgehend ist es die Aufgabe der Erfindung, ein Windenergieanlagenrotorblatt der eingangs genannten Art zur Verfügung zu stellen, das einen zuverlässigeren Potentialausgleich aufweist und einfacher herzustellen ist.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat eine Blattwurzel, einen Blitzrezeptor, einen Blitzschutzleiter, der elektrisch mit dem Blitzrezeptor verbunden und zur Ableitung eines Blitzstroms in Richtung zu der Blattwurzel hin bestimmt ist, ein weiteres elektrisch leitfähiges Element und ein flächiges Potentialausgleichselement, das den Blitzschutzleiter mit dem weiteren elektrisch leitfähigen Element elektrisch verbindet. Bei der Erfindung ist mindestens ein metallischer Verbindungskörper vorhanden, der in einem exothermen Schweißverfahren hergestellt ist und in dem der Blitzschutzleiter mit dem Potentialausgleichselement verschmolzen ist.

Das Potentialausgleichselement kann beispielsweise eine Fläche im Bereich von 0,1 m² bis 1 m² und eine Breite im Bereich von 5 cm bis 1 m aufweisen. Ein im Wesentlichen geradliniger Rand des Potentialausgleichselements kann flächig an dem Blitzschutzleiter anliegen. Es kann ein einziger metallischer Verbindungskörper oder es können mehrere, beispielsweise zwei oder drei metallische Verbindungskörper je Potentialausgleichselement ausgebildet sein. Durch den oder die metallischen Verbindungskörper wird nicht nur die elektrische Verbindung zwischen dem Blitzschutzleiter und dem Potentialausgleichselement hergestellt, sondern zugleich die relative Anordnung dieser beiden Elemente zueinander dauerhaft fixiert.

Bei dem exothermen Schweißverfahren findet in einem Schweißgranulat, das insbesondere ein Metalloxid und Aluminium aufweist, eine chemische Reaktion statt, zumeist ausgelöst durch eine initiale Wärmezufuhr durch Entzünden eines Zündpulvers. Das bei der stark exotherm ablaufenden Reaktion entstehende flüssige Metall fließt in eine Form, insbesondere aus Graphit, in der die zu verbindenden Abschnitte des Blitzschutzleiters und des Potentialausgleichselements angeordnet sind. Der Blitzschutzleiter und das Potentialausgleichselement schmelzen dabei auf und verbinden sich mit dem in die Form eingeströmten flüssigen Metall. Nach dem Erkalten ist ein metallischer Verbindungskörper vorhanden, in dem der Blitzschutzleiter mit dem Potentialausgleichselement verschmolzen ist. Auf diese Weise entsteht eine unmittelbare, stoffschlüssige und dauerhafte Verbindung zwischen dem Blitzschutzleiter und dem Potentialausgleichselement mit einem geringstmöglichen Übergangswiderstand. Zugleich wird der wirksame Querschnitt des Blitzschutzleiters im Bereich der Verbindung zum Potentialausgleichselement nicht verringert, sondern durch den metallischen Verbindungskörper eher vergrößert, sodass die Stromtragfähigkeit des Blitzschutzleiters nicht beeinträchtigt wird.

Ein weiterer Vorteil der Erfindung ist, dass der Blitzschutzleiter und die damit über den mindestens einen metallischen Verbindungskörper verbundenen Potentialausgleichselemente vorgefertigt werden können, sodass sich die Montage des Windenergieanlagenrotorblatts vereinfacht. Insbesondere kann ein solches, vorgefertigtes Halbzeug bei der Herstellung des Windenergieanlagenrotorblatts gemeinsam mit weiteren Bestandteilen, insbesondere Verstärkungsfasern, in eine Herstellungsform eingelegt und zum Beispiel in einem Vakuuminfusionsverfahren in eine Kunststoffmatrix eingebettet werden.

In einer Ausgestaltung weist der Blitzschutzleiter eine Vielzahl von Einzeldrähten auf. Die Verwendung eines Blitzschutzleiters mit einer Vielzahl von Einzeldrähten stellt eine ausreichende Flexibilität des Blitzschutzleiters sicher, sodass auch im unmittelbar an den metallischen Verbindungskörper angrenzenden Bereich kein Risiko für einen Leitungsbruch besteht.

In einer Ausgestaltung ist der Blitzschutzleiter ein Flechtschlauch aus den Einzeldrähten, beispielsweise ein Kupferflechtschlauch. Grundsätzlich können die Einzeldrähte des Blitzschutzleiters auf auch andere Weise gebündelt sein, beispielsweise verdrillt oder zumindest teilweise ummantelt. Ein Flechtschlauch zeichnet sich durch seine hohe Flexibilität und dadurch aus, dass er einfach zu einem flachen, insgesamt beispielsweise etwa rechteckigen Querschnitt gepresst werden kann. Unabhängig von der Anordnung der Einzeldrähte des Blitzschutzleiters kann der Blitzschutzleiter insgesamt einen Querschnitt im Bereich von 10 mm² bis 100 mm², insbesondere von etwa 50 mm² aufweisen.

In einer Ausgestaltung weist das Potentialausgleichselement ein Gewebe, Geflecht, Gitter oder eine gelochte Folie auf. Das Gewebe, Geflecht oder Gitter kann aus einer Vielzahl von Einzeldrähten bestehen. Die Einzeldrähte des Gewebes, Geflechts oder Gitters können in dem mindestens einen metallischen Verbindungskörper verschmolzen sein, insbesondere mit Einzeldrähten des Blitzschutzleiters. Durch das genannte Material ist das Potentialausgleichselement sehr flexibel und kann sich an die Form des weiteren elektrischen Elements anpassen. Außerdem kann es beispielsweise mittels Vakuuminfusion mit dem weiteren elektrischen Element verbunden werden.

In einer Ausgestaltung ist das Potentialausgleichselement eine Filtertresse. Filtertressen werden mit unterschiedlichen Maschenweiten als Filtermedien angeboten, beispielsweise zur Trennfiltration oder zur Klärfiltration. Sie sind daher kostengünstig erhältlich. Wegen ihrer relativ feinen Struktur ermöglichen sie eine besonders großflächige Kontaktierung des weiteren elektrisch leitfähigen Elements und sind gut drapierbar.

In einer Ausgestaltung besteht der mindestens eine metallische Verbindungskörper aus demselben Metall wie der Blitzschutzleiter und das Potentialausgleichselement. In diesem Fall kommt es zu einer besonders innigen Verbindung zwischen den unterschiedlichen Bauelementen. Der Metalloxid-Reaktionspartner des Schweißgranulats ist dann ein Oxid des Metalls des Blitzschutzleiters und des Potentialausgleichselements.

In einer Ausgestaltung bestehen der Blitzschutzleiter und/oder das Potentialausgleichselement aus Kupfer. Kupfer weist eine hohe elektrische Leitfähigkeit auf und ist einfach zu verarbeiten. Das Verschweißen in dem exothermen Schweißverfahren kann unter Verwendung eines Schweißgranulats, das Kupferoxid und Aluminium aufweist, erfolgen.

Bei der Erfindung ist das weitere elektrisch leitfähige Element ein kohlenstofffaserhaltiges Tragstrukturbauteil des Windenergieanlagenrotorblatts. Beispielsweise kann es sich um einen Holm, Gurt oder Steg handeln, insbesondere um einen Hauptgurt.

In einer Ausgestaltung liegt das Potentialausgleichselement an dem elektrisch leitfähigen Element an. Auf diese Weise wird ein guter elektrischer Kontakt hergestellt.

In einer Ausgestaltung weist das Potentialausgleichselement eine rautenförmige Gestalt auf. Durch die rautenförmige Gestalt wird das Material des Potentialausgleichselements in Längsrichtung des Gurtes geschäftet, wodurch Spannungssprünge vermieden werden können.

In einer Ausgestaltung weist der mindestens eine metallische Verbindungskörper einen elektrischen Anschluss auf, an den ein Blitzrezeptor und/oder ein sonstiger elektrischer Leiter angeschlossen werden kann. Der sonstige elektrische Leiter kann beispielsweise ein weiteres Potentialausgleichselement sein, das einen Potentialausgleich zwischen dem Blitzschutzleiter und beispielsweise einer Signalkabelabschirmung, einer elektrischen Heizeinrichtung oder eines sonstigen elektrisch leitfähigen Elements des Windenergieanlagenrotorblatts herstellt. Somit wird der mindestens eine metallische Verbindungskörper in vorteilhafter Weise nicht nur zur Verbindung des Blitzschutzleiters mit dem flächigen Potentialausgleichselement, sondern zusätzlich als elektrischer Anschluss genutzt. Hierfür ist der metallische Verbindungskörper besonders geeignet, ohne dass eine Schwächung der Stromtragfähigkeit des Blitzschutzleiters zu befürchten ist.

In einer Ausgestaltung weist der elektrische Anschluss eine Gewindebohrung auf. Die Gewindebohrung kann sich in dem metallischen Verbindungskörper befinden. Der elektrische Kontakt zu einem Blitzrezeptor oder einem sonstigen elektrischen Leiter kann dann durch Einschrauben des Blitzrezeptors in die Gewindebohrung oder durch eine Klemmbefestigung mithilfe einer in die Gewindebohrung eingeschraubten Klemmschraube hergestellt werden. Dabei kann die Schraubverbindung im Bereich der ineinandergreifenden Gewinde eine ausreichende elektrische Kontaktfläche herstellen, sodass Außenflächen des metallischen Verbindungskörpers zum Herstellen der elektrischen Verbindung nicht zugänglich sein müssen. Daher kann der metallische Verbindungskörper bei der Herstellung des Windenergieanlagenrotorblatts wahlweise vollständig in eine Kunststoffmatrix eingebettet werden.

In einer Ausgestaltung ist der mindestens eine metallische Verbindungskörper scheibenförmig mit zu den Rändern hin abnehmender Dicke. Die Scheibe kann beispielsweise quadratisch, rechteckig oder rund ausgebildet sein. Ihre Gestalt kann durch die Form, in der das exotherme Schweißverfahren durchgeführt wird, vorgegeben werden. Bei einer relativ großformatigen, scheibenförmigen Gestalt kann beispielsweise ohne weiteres eine sehr große Anzahl von Einzeldrähten in die Verbindung einbezogen werden. Durch die zu den Rändern hin abnehmende Dicke kann die gesamte Anordnung besonders gut beispielsweise in ein Laminat aus Verstärkungsfasern eingebettet werden.

In einer Ausgestaltung sind mehrere, voneinander beabstandete Potentialausgleichselemente an unterschiedlichen Radiuspositionen des Windenergieanlagenrotorblatts angeordnet und über jeweils mindestens einen der metallischen Verbindungskörper mit dem Blitzschutzleiter verbunden. Auch in dieser Ausgestaltung kann ein vorgefertigtes Halbzeug hergestellt werden, das dann einen über die gesamte Länge des weiteren leitfähigen Elements bzw. des Blitzschutzleiters ausreichenden Potentialausgleich sicherstellt.

In einer Ausgestaltung sind der Blitzschutzleiter und/oder das Potentialausgleichselement und/oder der mindestens eine metallische Verbindungskörper in eine Kunststoffmatrix eingebettet. Insbesondere können die genannten Elemente in ein Laminat des Windenergieanlagenrotorblatts, beispielsweise einer Rotorblatthalbschale, eingebettet sein. Sowohl das Potentialausgleichselement als auch der Blitzschutzleiter sind auf diese Weise durch ihre in eine Vielzahl von Einzeldrähten fein aufgelöste Struktur problemlos und dauerhaft in das Windenergieanlagenrotorblatt integrierbar. Zugleich wird ein dauerhafter Korrosionsschutz auch im Bereich des metallischen Verbindungskörpers erzielt.

Nachfolgend wird die Erfindung anhand eines in Figuren dargestellten Ausführungsbeispiels näher erläutert. Es zeigen:
- Fig. 1: ein erfindungsgemäßes Windenergieanlagenrotorblatt in einer schematischen Darstellung,
- Fig. 2: einen Teil eines Blitzschutzleiters mit einem mit drei metallischen Verbindungskörpern verbundenen Potentialausgleichselement in einer schematischen Darstellung,
- Fig. 3: eine vergrößerte Darstellung des in Fig. 2 mit A bezeichneten Bereichs,
- Fig. 4: eine Querschnittsdarstellung entlang der in Fig. 2 mit B-B bezeichneten Ebene.

Das Windenergieanlagenrotorblatt 10 aus Fig. 1 hat eine Blattwurzel 12 und eine Blattspitze 14, an der ein Blitzschutzrezeptor 16 angeordnet ist.

Ein weiteres leitfähiges Element 18 in Form eines kohlenstofffaserhaltigen Hauptgurts erstreckt sich von der Blattwurzel 12 in Längsrichtung des Windenergieanlagenrotorblatts bis in einen Bereich nahe der Blattspitze 14. Parallel zu dem weiteren leitfähigen Element 18 ist ein Blitzschutzleiter 20 in dem Windenergieanlagenrotorblatt 10 angeordnet, der sich von der Blattwurzel 12 bis in den Bereich der Blattspitze 14 erstreckt und dort über eine elektrische Leitung 22 mit dem Blattspitzenrezeptor 16 verbunden ist.

Ein Potentialausgleich zwischen dem Blitzschutzleiter 20 und dem weiteren elektrisch leitfähigen Element 18 wird über mehrere Potentialausgleichselemente 24, die im Beispiel aus Kupferfiltertressen bestehen, hergestellt.

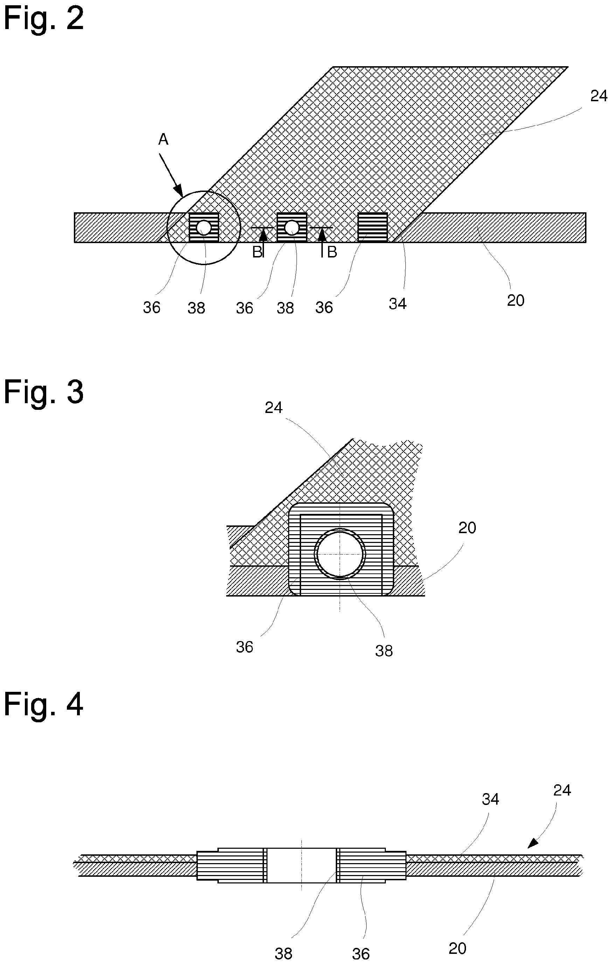

Im Bereich eines der Potentialausgleichselemente 24 ist ein weiterer Blitzrezeptor 26 gezeigt, der mit einem metallischen Verbindungskörper (siehe Figuren 2 bis 4) verschraubt ist. Außerdem ist in der Figur 1 eine Signalleitung 28 gezeigt, die zu einem Sensor 30 führt. Eine Abschirmung der Signalleitung 28 ist über einen Potentialausgleichsleiter 32 mit einem metallischen Verbindungskörper (siehe Fig. 2 bis 4) eines anderen Potentialausgleichselements 24 verbunden.

Jedes der Potentialausgleichselemente 24 liegt großflächig an einem Längsabschnitt des weiteren elektrisch leitfähigen Elements 18 an.

Fig. 2 zeigt eine vergrößerte Darstellung eines Abschnitts des Blitzschutzleiters 20, der aus einem Kupferflechtschlauch mit einem wirksamen Querschnitt von etwa 50 mm² besteht. Dieser ist flachgedrückt, sodass er im Querschnitt annähernd rechteckförmig ist. Ein Potentialausgleichselement 24 besteht aus einem rautenförmigen Zuschnitt einer Kupferfiltertresse. Ein Randabschnitt 34 des Potentialausgleichselements 24 liegt an dem Blitzschutzleiter 20 an. Eine dauerhafte elektrische Verbindung zwischen dem Potentialausgleichselement 24 und dem Blitzschutzleiter 20 ist über drei metallische Verbindungskörper 36 hergestellt, die in einem exothermen Schweißverfahren hergestellt sind. Einzeldrähte des Blitzschutzleiters 20 und Einzeldrähte des Potentialausgleichselements 24 sind in dem metallischen Verbindungskörper 36 miteinander verschmolzen.

Zwei der drei gezeigten metallischen Verbindungskörper 36 weisen jeweils eine Gewindebohrung 38 auf, die in den Fig. 3 und 4 besser erkennbar ist. In der Fig. 3 erkennt man, dass die metallischen Verbindungskörper 36 scheibenförmig mit einer annähernd quadratischen Grundform mit leicht abgerundeten Ecken sind. Diese Form der metallischen Verbindungskörper ist durch eine Herstellungsform, in der das exotherme Schweißverfahren durchgeführt wird, vorgegeben.

In der Querschnittsdarstellung der Fig. 4 erkennt man besonders gut, dass der Blitzschutzleiter 20 und der Randabschnitt 34 des Potentialausgleichselements 24 aneinander anliegen. Der metallische Verbindungskörper 36 weist eine im Wesentlichen gleichmäßige Dicke auf, die zu den Rändern hin leicht abnimmt. Die Dicke des metallischen Verbindungskörpers 36 ist größer als die Höhe des Blitzschutzleiters 20 mit darauf angeordnetem Randabschnitt 34 des Potentialausgleichselements 24.

In das Innengewinde 38 kann ein Gewindebolzenabschnitt des weiteren Blitzrezeptors 26 eingeschraubt sein, sodass der weitere Blitzschutzrezeptor 36 unmittelbar benachbart zu dem Blitzschutzleiter 20 angeordnet werden kann. Weitere Verbindungselemente werden hierfür nicht benötigt. Sonstige elektrische Leiter können zum Beispiel über einen Gewindebolzen, der in das Innengewinde 38 eingeschraubt ist, mit dem Blitzschutzleiter 20 in elektrischen Kontakt gebracht werden.

### Liste der verwendeten Bezugszeichen:

- 10: Windenergieanlagenrotorblatt
- 12: Blattwurzel
- 14: Blattspitze
- 16: Blitzrezeptor
- 18: weiteres elektrisch leitfähiges Element
- 20: Blitzschutzleiter
- 22: elektrische Leitung
- 24: Potentialausgleichselement
- 26: weiterer Blitzrezeptor
- 28: Signalleitung
- 30: Sensor
- 32: Potentialausgleichsleiter
- 34: Randabschnitt
- 36: metallischer Verbindungskörper
- 38: Gewindebohrung

## Patentansprüche

1. Windenergieanlagenrotorblatt (10) mit einer Blattwurzel (12), einem Blitzrezeptor (16), einem Blitzschutzleiter (20), der elektrisch mit dem Blitzrezeptor (16) verbunden und zur Ableitung eines Blitzstroms in Richtung zu der Blattwurzel (12) hin bestimmt ist, einem weiteren elektrisch leitfähigen Element (18), das ein kohlenstofffaserhaltiges Tragstrukturbauteil des Windenergieanlagenrotorblatts (10) ist, und einem flächigen Potentialausgleichselement (24), das den Blitzschutzleiter (20) mit dem weiteren elektrisch leitfähigen Element (18) elektrisch verbindet, **dadurch gekennzeichnet, dass** mindestens ein metallischer Verbindungskörper (36) vorhanden ist, der in einem exothermen Schweißverfahren hergestellt ist und in dem der Blitzschutzleiter (20) mit dem flächigen Potentialausgleichselement (24) verschmolzen ist.

2. Windenergieanlagenrotorblatt (10) nach Anspruch 1, **dadurch gekennzeichnet, dass** der Blitzschutzleiter (20) eine Vielzahl von Einzeldrähten aufweist.

3. Windenergieanlagenrotorblatt (10) nach Anspruch 2, **dadurch gekennzeichnet, dass** der Blitzschutzleiter (20) ein Flechtschlauch aus den Einzeldrähten ist.

4. Windenergieanlagenrotorblatt (10) nach einem der Ansprüche 1 bis 3, **dadurch gekennzeichnet, dass** das Potentialausgleichselement (24) ein Gewebe, Geflecht, Gitter oder eine gelochte Folie aufweist.

5. Windenergieanlagenrotorblatt (10) nach Anspruch 4, **dadurch gekennzeichnet, dass** das Potentialausgleichselement (24) eine Filtertresse ist.

6. Windenergieanlagenrotorblatt (10) nach einem der Ansprüche 1 bis 5, **dadurch gekennzeichnet, dass** der mindestens eine metallische Verbindungskörper (36) aus demselben Metall besteht wie der Blitzschutzleiter (20) und das Potentialausgleichselement (24).

7. Windenergieanlagenrotorblatt (10) nach einem der Ansprüche 1 bis 6, **dadurch gekennzeichnet, dass** der Blitzschutzleiter (20) und/oder das Potentialausgleichselement (24) aus Kupfer bestehen.

8. Windenergieanlagenrotorblatt (10) nach einem der Ansprüche 1 bis 7, **dadurch gekennzeichnet, dass** das Potentialausgleichselement (24) an dem weiteren elektrisch leitfähigen Element (18) anliegt.

9. Windenergieanlagenrotorblatt (10) nach einem der Ansprüche 1 bis 8, **dadurch gekennzeichnet, dass** das Potentialausgleichselement (24) eine rautenförmige Gestalt aufweist.

10. Windenergieanlagenrotorblatt (10) nach einem der Ansprüche 1 bis 9, **dadurch gekennzeichnet, dass** der mindestens eine metallische Verbindungskörper (36) einen elektrischen Anschluss aufweist, an den ein Blitzrezeptor (16) und/oder ein sonstiger elektrischer Leiter (32) angeschlossen werden kann.

11. Windenergieanlagenrotorblatt (10) nach Anspruch 10, **dadurch gekennzeichnet, dass** der elektrische Anschluss eine Gewindebohrung (38) aufweist.

12. Windenergieanlagenrotorblatt (10) nach einem der Ansprüche 1 bis 11, **dadurch gekennzeichnet, dass** der mindestens eine metallische Verbindungskörper (36) scheibenförmig ist mit zu den Rändern hin abnehmender Dicke.

13. Windenergieanlagenrotorblatt (10) nach einem der Ansprüche 1 bis 12, **dadurch gekennzeichnet, dass** mehrere, voneinander beabstandete Potentialausgleichselemente (24) an unterschiedlichen Radiuspositionen des Windenergieanlagenrotorblatts (10) angeordnet und über jeweils mindestens einen der metallischen Verbindungskörper (36) mit dem Blitzschutzleiter (20) verbunden sind.

14. Windenergieanlagenrotorblatt (10) nach einem der Ansprüche 1 bis 13, **dadurch gekennzeichnet, dass** der Blitzschutzleiter (20) und/oder das Potentialausgleichselement (24) und/oder der mindestens eine metallische Verbindungskörper (36) in eine Kunststoffmatrix eingebettet sind.

## Claims

1. A wind turbine rotor blade (10) with a blade root (12), a lightning receptor (16), a lightning conductor (20) that is electrically connected to the lightning receptor (16) and is determined for diverting a lightning current in the direction toward the blade root (12), another electrically conductive element (18) that is a carbon-fiber-containing support structure component of the wind turbine rotor blade (10), and a flat potential equalization element (24) that electrically connects the lightning conductor (20) to the other electrically conductive element (18), **characterized in that** at least one metallic connecting body (36) is present that is produced with an exothermic welding method and in which the lightning conductor (20) is fused with the flat potential equalization element (24).

2. The wind turbine rotor blade (10) according to claim 1, **characterized in that** the lightning conductor (20) has a plurality of individual wires.

3. The wind turbine rotor blade (10) according to claim 2, **characterized in that** the lightning protection conductor (20) is a braided sleeve composed of the individual wires.

4. The wind turbine rotor blade (10) according to one of claims 1 to 3, **characterized in that** the potential equalization element (24) has a fabric, mesh, lattice or a perforated foil.

5. The wind turbine rotor blade (10) according to claim 4, **characterized in that** the potential equalization element (24) is a filter plait.

6. The wind turbine rotor blade (10) according to one of claims 1 to 5, **characterized in that** the at least one metallic connecting body (36) is composed of the same metal as the lightning conductor (20) and the potential equalization element (24).

7. The wind turbine rotor blade (10) according to one of claims 1 to 6, **characterized in that** the lightning conductor (20) and/or the potential equalization element (24) are composed of copper.

8. The wind turbine rotor blade (10) according to one of claims 1 to 7, **characterized in that** the potential equalization element (24) abuts the other electrically conductive element (18).

9. The wind turbine rotor blade (10) according to one of claims 1 to 8, **characterized in that** the potential equalization element (24) has a rhombus-shaped form.

10. The wind turbine rotor blade (10) according to one of claims 1 to 9, **characterized in that** the at least one metallic connecting body (36) has an electrical connection to which a lightning receptor (16) and/or another electrical conductor (32) can be attached.

11. The wind turbine rotor blade (10) according to claim 10, **characterized in that** the electrical connection has a threaded bore (38).

12. The wind turbine rotor blade (10) according to one of claims 1 to 11, **characterized in that** the at least one metallic connecting body (36) is disk-shaped with a thickness that decreases toward the edges.

13. The wind turbine rotor blade (10) according to one of claims 1 to 12, **characterized in that** multiple potential equalization elements (24) spaced apart from each other are arranged at different radius positions of the wind turbine rotor blade (10) and are connected to the lightning conductor (20) each via at least one of the metallic connecting bodies (36).

14. The wind turbine rotor blade (10) according to one of claims 1 to 13, **characterized in that** the lightning conductor (20) and/or the potential equalization element (24) and/or the at least one metallic connecting body (36) are embedded in a plastic matrix.

## Revendications

1. Pale de rotor d'éolienne (10) comprenant une base de pale (12), un récepteur de foudre (16), un conducteur de parafoudre (20) électriquement relié au récepteur de foudre (16) et conçu pour dévier un courant de foudre dans la direction vers la base de pale (12), un autre élément électriquement conducteur (18) consistant en une pièce de structure de support de la pale de rotor d'éolienne (10) contenant des fibres de carbone, et un élément de compensation de potentiel plat (24) reliant électriquement le conducteur de parafoudre (20) à l'autre élément électriquement conducteur (18), **caractérisée en ce qu'**il est prévu au moins un corps de liaison métallique (36), lequel est fabriqué à l'aide d'un procédé de soudage exothermique et dans lequel le conducteur de parafoudre (20) est fondu avec l'élément de compensation de potentiel plat (24).

2. Pale de rotor d'éolienne (10) selon la revendication 1, **caractérisée en ce que** le conducteur de parafoudre (20) présente une pluralité de fils individuels.

3. Pale de rotor d'éolienne (10) selon la revendication 2, **caractérisée en ce que** le conducteur de parafoudre (20) est un tuyau tressé à partir des fils individuels.

4. Pale de rotor d'éolienne (10) selon l'une des revendications 1 à 3, **caractérisée en ce que** l'élément de compensation de potentiel (24) présente un tissu, un treillis, un grillage ou une feuille perforée.

5. Pale de rotor d'éolienne (10) selon la revendication 4, **caractérisée en ce que** l'élément de compensation de potentiel (24) est un tressage de filtre.

6. Pale de rotor d'éolienne (10) selon l'une des revendications 1 à 5, **caractérisée en ce que** l'au moins un corps de liaison métallique (36) est constitué du même métal que le conducteur de parafoudre (20) et l'élément de compensation de potentiel (24).

7. Pale de rotor d'éolienne (10) selon l'une des revendications 1 à 6, **caractérisée en ce que** le conducteur de parafoudre (20) et/ou l'élément de compensation de potentiel (24) est constitué de cuivre.

8. Pale de rotor d'éolienne (10) selon l'une des revendications 1 à 7, **caractérisée en ce que** l'élément de compensation de potentiel (24) s'applique contre l'autre élément électriquement conducteur (18).

9. Pale de rotor d'éolienne (10) selon l'une des revendications 1 à 8, **caractérisée en ce que** l'élément de compensation de potentiel (24) présente une forme en losange.

10. Pale de rotor d'éolienne (10) selon l'une des revendications 1 à 9, **caractérisée en ce que** l'au moins un corps de liaison métallique (36) présente un raccordement électrique auquel peut être raccordé un récepteur de foudre (16) et/ou un autre conducteur électrique (32).

11. Pale de rotor d'éolienne (10) selon la revendication 10, **caractérisée en ce que** le raccordement électrique présente un alésage fileté (38).

12. Pale de rotor d'éolienne (10) selon l'une des revendications 1 à 11, **caractérisée en ce que** l'au moins un corps de liaison métallique (36) présente une forme de disque, avec une épaisseur diminuant vers les bords.

13. Pale de rotor d'éolienne (10) selon l'une des revendications 1 à 12, **caractérisée en ce que** plusieurs éléments de compensation de potentiel (24) espacés les uns des autres sont disposés à différentes positions radiales de la pale de rotor d'éolienne (10) et reliés au conducteur de parafoudre (20) respectivement par le biais d'au moins l'un des corps de liaison métalliques (36).

14. Pale de rotor d'éolienne (10) selon l'une des revendications 1 à 13, **caractérisée en ce que** le conducteur de parafoudre (20) et/ou l'élément de compensation de potentiel (24) et/ou l'au moins un corps de liaison métallique (36) sont enrobés dans une matrice en matière plastique.
